(19) Europäisches Patentamt
European Patent Office
Office européen des brevets

(11) **EP 2 623 271 B1**

(12) **EUROPÄISCHE PATENTSCHRIFT**

(45) Veröffentlichungstag und Bekanntmachung des Hinweises auf die Patenterteilung:
**18.06.2014 Patentblatt 2014/25**

(51) Int Cl.:
*B25J 9/16* *(2006.01)*     *G05B 19/404* *(2006.01)*

(21) Anmeldenummer: **12153820.1**

(22) Anmeldetag: **03.02.2012**

(54) **Verfahren zum Betrieb einer Bearbeitungsmaschine**

Method for operating a processing machine

Procédé destiné au fonctionnement d'une machine de traitement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.08.2013 Patentblatt 2013/32**

(73) Patentinhaber: **Siemens Aktiengesellschaft**
**80333 München (DE)**

(72) Erfinder:
• **Alkafafi, Loay**
**91056 Erlangen (DE)**
• **Hamm, Carsten, Dr.**
**91058 Erlangen (DE)**
• **Sauer, Tomas, Prof.**
**90537 Feucht (DE)**

(56) Entgegenhaltungen:
**EP-A1- 1 465 034          DE-T2- 69 514 570**
**US-A1- 2008 275 574**

• **SINGER N C ET AL: "PRESHAPING COMMAND INPUTS TO REDUCE SYSTEM VIBRATION", JOURNAL OF DYNAMIC SYSTEMS, MEASUREMENT AND CONTROL, A S M E INTERNATIONAL, US, Bd. 112, Nr. 1, 1. März 1990 (1990-03-01), Seiten 76-82, XP000952223, ISSN: 0022-0434**
• **WILLIAM E SINGHOSE ET AL: "Effects of Input Shaping on Two-Dimensional Trajectory Following", IEEE TRANSACTIONS ON ROBOTICS AND AUTOMATION, IEEE INC, NEW YORK, US, Bd. 12, Nr. 6, 1. Dezember 1996 (1996-12-01), XP011053163, ISSN: 1042-296X**

EP 2 623 271 B1

## Beschreibung

Die Erfindung betrifft ein Verfahren zum Betrieb einer Bearbeitungsmaschine, also zum Beispiel ein Verfahren zum Betrieb eines Roboters , zum Betrieb einer Werkzeugmaschine oder jeder anderen Maschine, mit der eine Be- oder Verarbeitung von Werkstoffen erfolgt (Bearbeitungsmaschine).

Bearbeitungsmaschinen, also insbesondere Roboter und numerisch gesteuerte Werkzeugmaschinen, sind an sich bekannt und aufgrund ihrer mechanischen Systemeigenschaften (Massenträgheiten, endliche Steifigkeit) grundsätzlich schwingungsfähig. Bei der Ansteuerung durch eine numerische Steuerung (kommandierter Verfahrbefehl) prägen sich diese Schwingungen mehr oder minder, aber zumeist ungewünscht aus. Typischerweise führen die vorherrschenden Eigenschaften dabei zu gedämpften harmonischen Schwingungen. Mit maschinenbaulichen Maßnahmen lassen sich durch die gezielte Auslegung der mechanischen Komponenten und die Wahl der Konstruktion die strukturdynamischen Eigenschaften beeinflussen.

Steigende Anforderungen an die Produktivität solcher Bearbeitungsmaschinen zwingen den Maschinenbauer zu leichteren Konstruktionen, die dynamischer bewegbar sind. Die Reduzierung der bewegten Massen verringert dabei aber auch die mechanische Steifigkeit. Infolgedessen kommt es im dynamischen Antwortverhalten zur Ausprägung von Systemschwingungen in für den Betrieb kritischen Bereichen (sei es Frequenz oder Amplitude), denen durch Maßnahmen der Steuerungs- und Regelungstechnik begegnet werden kann.

Bearbeitungsmaschinen der eingangs genannten Art arbeiten größtenteils im Bahnsteuerungsbetrieb, bei dem beliebige Verfahrbewegungen mit sogenannten interpolierenden, also gleichzeitig geregelten Achsen realisiert werden (mindestens zwei Achsen, typisch drei oder fünf Achsen, in Sonderfällen auch sechs oder mehr Achsen). Das Interpolieren von Achsen bedeutet, dass die mechanisch zunächst unabhängigen Bewegungsabläufe der einzelnen Achsen so miteinander kombiniert und synchronisiert werden, dass das jeweilige Werkzeug oder ein sogenannter Tool-Center-Point (TCP) der Bearbeitungsmaschine möglichst genau einer jeweils vorgegebenen Bahn (Soll-Bahn) oder einer solchen aus einer vorgegebenen Kontur (Sollkontur) resultierenden Bahn folgt.

Weil das strukturdynamische Verhalten (Eigenfrequenzen und Schwingformen) der einzelnen Maschinenachsen im Allgemeinen unterschiedlich ist, tragen die Eigenschaften der an der Bahn beteiligten Achsen also auch unterschiedlich zum dynamischen Gesamtverhalten bei. Dennoch soll die programmierte Bahn möglichst schnell (Produktivität) und möglichst genau (Qualität) abgefahren werden.

Die Maßnahmen zum Umgang mit mechanischen Schwingungen an Werkzeugmaschinen als Beispiel für Bearbeitungsmaschinen allgemeiner Art sind zahlreich und mehr oder minder erfolgreich. Neben rein mechanischen Ansätzen (z.B. dem Anbringen von mechanisch passiven Dämpferelementen) bieten mechatronische Ansätze mit einer Kombination aus Mechanik, Aktorik und Regelungstechnik oft die erfolgreicheren Zugänge.

Bekannt sind insoweit drei Klassen von Lösungsansätzen, nämlich ein achsenbezogener Ansatz, ein regelungstechnischer Ansatz sowie eine Dynamikanpassung.

Beim achsenbezogenen Ansatz unterscheidet man zwischen einem achsenbezogenen Ansatz mit einem Sollwert-Filter und einem achsenbezogenen Ansatz mit einer Formfunktion. Beim achsenbezogenen Ansatz mit Sollwert-Filter werden die Bewegungs-Sollwerte durch sogenannte Inputshaper geeignet gefiltert, wobei störende Frequenzen einer Achse nach dem Prinzip eines als Bandsperre wirksamen Filters aus dem Frequenzspektrum entfernt und so erst gar nicht angeregt werden. Im Hinblick auf weitere Details zu diesem Ansatz kann auf die Veröffentlichung von N. C. Singer und W. P. Seering mit dem Titel "Preshaping command inputs to reduce system vibration", in ASME Journal of Dynamic Systems, Measurement and Control, vol. 112, pp. 76-82, 1990, verwiesen werden.

Beim achsenbezogenen Ansatz mit Formfunktion wird ein jeweiliges Bewegungsprofil aus bekannten Grundformen zusammengesetzt (z.B. sin(t)^2). Bei geeigneter Abstimmung der Periode der Formfunktion im Bezug zur Zeitkonstanten der mechanischen Schwingung wird die kritische Frequenz aus dem Frequenzspektrum der Bewegungs-Sollwerte herausgehalten und so erst gar nicht angeregt.

Eine besonders simpler Ansatz in dieser Hinsicht ist aus der DE 695 14 570 T2 bekannt. Dort wird eine Bewegungsbahn in einen Beschleunigungsabschnitt, einen anschließenden Abschnitt mit konstanter Geschwindigkeit und einen abschließenden Verzögerungsabschnitt aufgeteilt. Durch eine geeignete Festlegung dieser Bereiche sollen unerwünschte Schwingungen vermieden werden.

Ein weiterer achsbezogener Ansatz wird in der US 2008/ 0275574 A vorgestellt. Dieser basiert auf der Auswahl einer Bewegungsbahn aus einer Datenbasis anhand einer vorgegebenen Bewegungsbahn und vorgegebener Kriterien. Die aus der Datenbasis ausgewählte Bewegungsbahn wird abschließend einer Amplitudienskalierung und/oder einer zeitlichen Skalierung unterworfen um einerseits dynamische und andererseits zeitliche Randbedingungen zu erfüllen.

Allerdings ist der achsenbezogene Ansatz auch mit Nachteilen verbunden: Zum einen kann eine für eine Achse ermittelte (eindimensionale) Bahn nicht auf eine Bahn im Raum (2D und höher) und damit einen interpolierenden Betrieb mehrerer Achsen übertragen werden. Zum anderen kommt es durch die jeweilige Filterlaufzeit mitunter zur Verletzung vorher berechneter dynamischer Limitierungen, zum Beispiel hinsichtlich der Beschleunigung. Die Ist-Kontur weicht demnach von der Soll-Kontur ab. Es gibt aber kein allgemeingültiges Verfahren zur adäquaten Berücksichtigung der Fehlerdynamik in der Steuerung. Die Veröffentlichung "Effects of input shaping on twodimensional trajectory following" von W. Singhose und N. Singer in IEEE Transactions on Robotics and Automation, vol. 12, no. 6, pp. 881-887, 1996, zeigt lediglich Ansätze für rechteckige bzw. kreisförmige Bahnen.

Beim regelungstechnischen Ansatz wird mit einer Einstellung der zugänglichen Reglerparameter (Lageregler, Geschwindigkeitsregler, etc.) eine Dämpfung der Schwingung (z.B. "Dämpfungsoptimum" oder "Doppelverhältnis") angestrebt. Dieser Ansatz ist zum Beispiel in der Veröffentlichung von H. Gross, J. Hamann, G. Wiegaertner in "Electrical Feed Drives in Automation: Basic, Computation, Dimensioning", MCD Corporate Publishing, Erlangen and Munich, 2001, beschrieben.

Auch der regelungstechnische Ansatz ist mit Nachteilen verbunden: Zum einen erhöht eine Parametrierung der Regler zur Schwingungsvermeidung oder -reduktion die Dämpfung auf Kosten der Dynamik. Zum anderen ist der regelungstechnische Ansatz überhaupt nur anwendbar, wenn die jeweils störende Schwingung durch Geber messtechnisch ausreichend erfassbar ist.

Bei einer Dynamikanpassung und "Symmetrierung" der Achsen erfolgt eine Übertragung der eindimensionalen Konzepte gemäß dem achsenbezogenen Ansatz auf mehrere Achsen und die abzufahrende Bahn/Kontur mit dem Ziel, bei allen beteiligten Achsen gleiche dynamische Eigenschaften zu erreichen. Das Ergebnis ist eine künstliche Verlangsamung der einzelnen interpolierenden Achsen und wird zum Beispiel mit einem Tiefpassfilter erreicht. Die resultierende Verlangsamung orientiert sich dabei an einer bezüglich ihrer Eigenfrequenz bzw. Schwingungsamplitude kritischen Achse. Im Ergebnis wird also die gesamte Bewegung auf eine "worst case" Situation abgestimmt, nämlich die notwendige Verlangsamung zur Vermeidung eventuell nur einer einzigen schwingungskritischen Stelle oder Region entlang der gesamten Bahn. Danach richten sich die Dynamikvorgaben in der Steuerung, also zum Beispiel für eine Ruckobergrenze. Hieraus ergibt sich der entscheidende Nachteil, dass die gesamte Bearbeitungszeit deutlich (und unnötigerweise) verlängert wird.

Der Erfindung liegt demnach das grundsätzliche Problem zugrunde, eine geeignete Kombination aus einer numerischen Steuerung mit ihren Algorithmen zur Steuerung und Regelung der Bearbeitungsmaschine auf der einen Seite sowie den dynamischen Eigenschaften der jeweiligen Bearbeitungsmaschine, also des jeweiligen technischen Systems, auf der anderen Seite anzugeben.

Diese Aufgabe wird erfindungsgemäß mit den Merkmalen des Anspruchs 1 gelöst. Dazu sind bei einem Verfahren zum Betrieb einer Bearbeitungsmaschine insbesondere die nachfolgend skizzierten Schritte vorgesehen:

Zunächst wird aus einer im Folgenden mitunter kurz nur als Bahn bezeichneten Soll-Bahn oder Soll-Kontur ein Bewegungsprofil ermittelt. Während die Bahn die gewünschte Bewegung oder einen Bewegungsabschnitt im dreidimensionalen Raum beschreibt, beschreibt das Bewegungsprofil zusätzlich zumindest auch die Geschwindigkeit, mit der die Bewegung entlang der Bahn erfolgt.

Sodann wird entlang des Bewegungsprofils als kritische Region eine schwingungskritische Stelle oder ein schwingungskritischer Bahnabschnitt ermittelt, also eine Region, in der es aufgrund von Schwingungen zu Abweichungen zwischen der Soll-Bahn und einer sich beim Abfahren des Bewegungsprofils ergebenen Ist-Bahn kommt oder kommen kann.

Daraufhin erfolgt in einem Abschnitt vor der jeweils ermittelten kritischen Region eine zeitliche Skalierung des Bewegungsprofils. Diese zeitliche Skalierung erfolgt dabei mit einer Skalierungsfunktion $c(t)$, die einen Anfangsbereich, einen Zentralbereich und einen Endbereich umfasst. Die Skalierungsfunktion $c(t)$ kann auch mehr als einen Zentralbereich umfassen und eine Dauer des Zentralbereichs kann im Einzelfall auch Null sein. Durch Optimierung werden eine Dauer des Anfangs-, Zentral- und Endbereichs der Skalierungsfunktion $c(t)$ und eine wirksame Höhe der Skalierungsfunktion $c(t)$ im Zentralbereich ermittelt, um die Schwingung in der kritischen Region zu vermeiden oder zu reduzieren. Die Dauer des Anfangs-, Zentral- und Endbereichs der Skalierungsfunktion $c(t)$ und die mit dem Formelzeichen b bezeichnete wirksame Höhe der Skalierungsfunktion $c(t)$ können als Parameter der von einer im Folgenden als Skalierungsschablone $g(t)$ bezeichneten Grundform ausgehenden Skalierungsfunktion $c(t)$ aufgefasst werden. Die Optimierung bewirkt demnach eine Variation der Parameter der Skalierungsschablone $g(t)$ und im Zuge einer üblicherweise iterativen Parametervariation ergeben sich am Ende der Optimierung günstige oder optimale Parameter für die Skalierungsschablone $g(t)$ und damit insgesamt die Skalierungsfunktion $c(t)$, welche die Schwingung in der kritischen Region vermeidet oder reduziert.

Die wichtigste Aufgabe einer numerischen Steuerung ist es, eine jeweils programmierte Bahn durch die jeweilige Bearbeitungsmaschine bestmöglich umzusetzen. Wie oben ausgeführt verletzen bekannte Verfahren zur Behandlung von mechanischen Schwingungen gerade diese Forderung nach Konturtreue.

Der Vorteil der Erfindung besteht darin, dass die Maßnahmen zur Schwingungsreduktion vollständig auf der programmierten Soll-Bahn, genauer dem daraus unmittelbar resultierenden Bewegungsprofil erfolgen. Die Zeitskalierung wirkt auf den Bahnparameter s (und seine zeitlichen Ableitungen, nämlich die Geschwindigkeit entlang der Bahn (Bahngeschwindigkeit), die Beschleunigung entlang der Bahn (Bahnbeschleunigung) und den Ruck entlang der Bahn), welcher allen Achsen gemein ist. Geometrie und Dynamik der Bahn werden also erst nach den notwendigen Korrekturen auf die einzelnen Maschinenachsen transformiert. Prinzipbedingt wird so ausgeschlossen, dass sich die für die Schwingungsreduktion günstige Beeinflussung der Sollwerte in den Achsen unterschiedlich auswirken und somit die Kontur verletzt wird.

Zudem sehen heute in der Praxis übliche Einstellvorschriften für numerische Steuerungen zumeist vor, dass der zulässige Dynamikbereich durch eine "Worst-Case-Betrachtung" beschränkt wird. Dies verhindert jedoch eine optimale Ausnutzung der jeweiligen Bearbeitungsmaschine und die mögliche Produktivität der Maschine wird nicht voll ausgenutzt. Zum einen legt man sich mit der Berücksichtigung der dynamisch "schwächsten" Achse als Auslegungskriterium klar und deutlich auf eine sichere Seite. Zum anderen ist die Parametrierung von Dynamikgrenzen (z.B. die Festlegung einer Ruckobergrenze für alle Bewegungsabschnitte) heute eine globale Einstellung, die sich typischerweise an der kritischsten Kontur orientiert, die die Maschine abfahren soll. Das hier vorgestellte Verfahren betrachtet demgegenüber den notwendigen Kompromiss aus Dynamik und Genauigkeit selektiv und lokal. Die Reduktion der Bahndynamik wirkt dort und nur dort, wo dies benötigt wird.

Die vorteilhafte Ausprägung des Verfahrens erlaubt die Einbindung in den sequenziellen Ablauf einer numerischen Steuerung. Die Abarbeitung der programmierten Kontur (NC-Teileprogramm) kann Stück für Stück erfolgen. Für die Optimierung muss nicht die ganze Bahn auf einmal betrachtet werden.

Als vorteilhafte Ausprägung erlaubt das Verfahren eine Variante des Optimierungsproblems, bei dem das zunächst ermittelte Bewegungsprofil bereits nach gewissen Kriterien optimal ist (z.B. ruckbegrenzt und zeitoptimal). Die Zeitachse kann prinzipiell nur noch gedehnt, aber nicht mehr gestaucht werden. Ausgehend von dieser zeitoptimalen Bahnplanung kann das Optimierungsproblem nur noch Skalierungen liefern, die kleiner (oder maximal gleich) Eins sind.

Als vorteilhaft wird ferner angesehen, dass sich das hier vorgestellte Verfahren mit dem Prinzip der Zeitskalierung bei Methoden bedient, die in Theorie und Praxis wohlbekannt sind.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer symmetrischen Grundform der zugrunde gelegten Skalierungsfunktion $c(t)$, bei der sich die Symmetrie dahingehend auswirkt, dass eine Dauer des Anfangsbereichs der Grundform der Skalierungsfunktion $g(t)$ einer Dauer des Endbereichs derselben Grundform entspricht, kann der Suchraum des Optimierungsverfahrens um eine Dimension reduziert werden. Dann bestimmt eine ermittelte Dauer des Anfangsbereichs der Skalierungsfunktion auch die Dauer des Endbereichs der Skalierungsfunktion und es muss nur noch eine optimale oder günstige Dauer des Anfangsbereichs der Skalierungsfunktion ermittelt werden.

Bei einer Ausführungsform des Verfahrens kommt in Betracht, dass zur Optimierung der Parameter der Skalierungsfunktion, nämlich der Dauern des Anfangs-, Zentral- und Endbereichs und der wirksamen Höhe im Zentralbereich, Verfahren der Mehrgrößenoptimierung verwendet werden. Dies ist von Vorteil, weil für die Mehrgrößenoptimierung unterschiedliche Verfahren in Theorie und Praxis wohlbekannt sind.

Bei einer besonderen Ausführungsform des Verfahrens zum Betrieb einer Bearbeitungsmaschine kommt als Verfahren der Mehrgrößenoptimierung eine Kombination des Pattern-Search-Algorithmus und der Golden-Section-Methode in Betracht. Dabei gibt ausgehend von Startwerten für die Parameter der Skalierungsfunktion der Pattern-Search-Algorithmus eine günstige Richtung für eine Variation der Parameter in einem mehrdimensionalen Suchraum vor. Die Golden-Section-Methode ermöglicht sodann das Auffinden eines Minimums entlang der eingeschlagenen Richtung mit möglichst geringem Aufwand.

Wenn beim Ermitteln einer kritischen Region entlang des Bewegungsprofils jeweils die entlang des Bewegungsprofils erste schwingungskritische Region ermittelt wird, besteht die Möglichkeit, diese schwingungskritische Region durch eine geeignete zeitliche Skalierung des Bewegungsprofils in einem Abschnitt vor der schwingungskritischen Region gewissermaßen zu entschärfen. Eventuelle Schwingungen, die sich ansonsten aufgrund der schwingungskritischen Region ausgebildet hätten, können sich damit auf nachfolgende Abschnitte des Bewegungsprofils nicht mehr auswirken. Durch sukzessive Ermittlung jeweils der ersten kritischen Region entlang des Bewegungsprofils, Entschärfung der kritischen Region durch zeitliche Skalierung und anschließende erneute Ermittlung einer neuen ersten kritischen Region lässt sich eine zeitliche Skalierung des gesamten Bewegungsprofils und entsprechend eine Entschärfung aller kritischen Regionen erreichen.

Als kritische Region entlang des Bewegungsprofils kommt speziell jede Position entlang des Bewegungsprofils in Betracht, bei der ein Bahnsteuerungsalgorithmus Dynamikparameter der Bearbeitungsmaschine variiert. Das Auffinden kritischer Regionen wird dadurch erleichtert.

Alternativ oder zusätzlich kann vorgesehen sein, dass die Ermittlung kritischer Regionen im Rahmen einer Simulation des Bewegungsprofils erfolgt. Bei einer Simulation des Bewegungsprofils wird das Verhalten der jeweiligen Bearbeitungsmaschine bei einer Bewegung entlang des Bewegungsprofils simuliert. Auch bei einer solchen simulierten Bewegung ergibt sich als Ist-Bahn eine von der simulierten Bearbeitungsmaschine abgefahrene Bahn. Bei Abweichungen der so ermittelten Ist-Bahn von der vorgegebenen Soll-Bahn um mehr als einen vorgegebenen oder vorgebbaren Schwellwert ist eine kritische Region erkannt. Auch bei einer Simulation des Bewegungsprofils kann die Identifikation von kritischen Regionen sukzessive nacheinander erfolgen. Immer dann, wenn eine kritische Region erkannt wurde, kann deren Entschärfung durch zeitliche Skalierung des Bewegungsprofils unmittelbar vor der kritischen Region mit einer Skalierungsfunktion c(t) und jeweils im Hinblick auf die kritische Region ermittelte Parameter der Skalierungsfunktion c(t) erfolgen. Sodann erfolgt eine erneute komplette Simulation des Bewegungsprofils und wenn im Rahmen der Simulation eine weitere kritische Region erkannt wird, erfolgt deren Entschärfung nach dem gleichen Prinzip, also mit einer zeitlichen Skalierung des Bewegungsprofils unmittelbar vor der kritischen Region entsprechend einer Skalierungsfunktion c(t), wobei sich die Parameter der Skalierungsfunktion c(t) zur Entschärfung der kritischen Region anhand der jeweiligen kritischen Region ergeben.

Die oben genannte Aufgabe wird auch mit einem Antriebssteuerungssystem zur Steuerung einer Bearbeitungsmaschine oder einer davon umfassten Steuerungseinrichtung gelöst, die nach dem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch eine Steuerungseinrichtung oder ein Antriebssteuerungssystem, in deren bzw. dessen Speicher als Mittel zur Durchführung des Verfahrens und seiner Ausgestaltungen ein solches Computerprogramm geladen oder ladbar ist. Ein solches Computerprogramm umfasst dabei Programmcode-Mittel, also Anweisungen in einer Programmiersprache oder Anweisungen in einer durch einen Prozessor ausführbaren Maschinensprache, um alle Schritte des Verfahrens wie hier und nachfolgend beschrieben durchzuführen, wenn das Programm durch ein Antriebssteuerungssystem für eine Bearbeitungsmaschine ausgeführt wird. Ein solches Antriebssteuerungssystem für eine Bearbeitungsmaschine weist dabei in an sich bekannter Art eine Verarbeitungseinheit in Form von oder nach Art eines Mikroprozessors und einen Speicher auf. In den Speicher ist das Computerprogramm geladen oder ladbar und im Betrieb der Bearbeitungsmaschine durch das Computerprogramm durch die Verarbeitungseinheit ausgeführt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1    eine Fräsmaschine als Beispiel für eine Bearbeitungsmaschine, der für eine Steuerung gemäß einem Verfahren wie hier beschrieben in Betracht kommt und dafür ein entsprechendes Antriebssteuerungssystem aufweist,

FIG 2    eine einfache Soll-Bahn / Soll-Kontur für eine Bearbeitungsmaschine,

FIG 3    Ausschnitte aus der Darstellung in FIG 2 mit jeweils einem Abschnitt einer Soll-Bahn und einem Abschnitt einer tatsächlichen Bewegungsbahn der Bearbeitungsmaschine (Ist-Bahn),

FIG 4    eine schematisch vereinfachte Darstellung des hier vorgeschlagenen Verfahrens anhand eines Flussdiagramms,

FIG 5    eine Darstellung einer Skalierungsfunktion c(t), wobei die dargestellte Form der Skalierungsfunktion c(t) auch eine Darstellung einer der Skalierungsfunktion c(t) zugrunde liegenden Skalierungsschablone g(t) ist, denn eine tatsächliche Skalierungsfunktion c(t) unterscheidet sich von Ihrer Grundform, nämlich der Skalierungsschablone g(t), nur durch eine eventuell andere Dimensionierung der Parameter T1, T2, T3 und b.

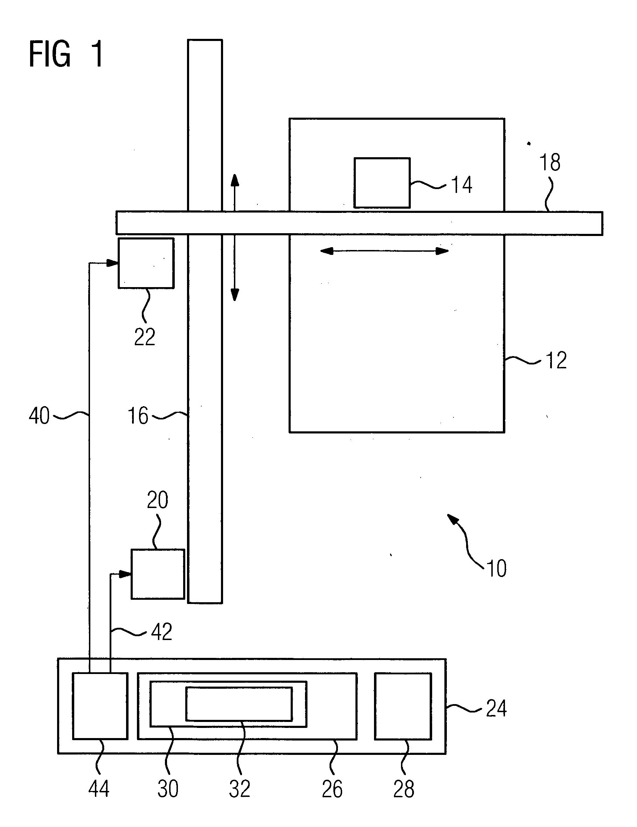

FIG 1 zeigt als Beispiel für eine Bearbeitungs- oder Werkzeugmaschine 10 eine schematisch vereinfachte Fräsmaschine zum spanenden Bearbeiten eines Werkstücks 12. Die Fräsmaschine erlaubt Bewegungen eines Werkzeugs 14, nämlich eines Fräskopfs, in x- und in y-Richtung (jeweils durch die Doppelpfeile zusätzlich verdeutlicht). Bei derartigen, unabhängigen Bewegungsmöglichkeiten spricht man bei Bearbeitungsmaschinen 10 jeweils von einem Freiheitsgrad. Hier handelt es sich um zwei translatorische Freiheitsgrade. Genauso können bei einer Bearbeitungsmaschine 10 zusätzlich oder alternativ ein oder mehrere rotatorische Freiheitsgrade realisiert sein.

Eine übliche Bezeichnung eines Freiheitsgrads einer Bearbeitungsmaschine 10 ist der Begriff Achse und entsprechend wird hier auf die beiden Freiheitsgrade der dargestellten Bearbeitungsmaschine 10 als erste und zweite Achse 16, 18 Bezug genommen. Jede Achse 16, 18 wird mit einem Motor angetrieben, indem dieser im dargestellten Ausführungsbeispiel zum Beispiel auf einen Treibriemen oder eine Spindel wirkt. Der jeweilige Motor und ein eventuell notwendiges Getriebe werden als Antrieb 20, 22 bezeichnet. Jeder Antrieb 20, 22 wird von einem Antriebssteuerungssystem 24 angesteuert, wobei ein und dasselbe Antriebssteuerungssystem 24 - wie hier dargestellt - auch mehrere Antriebe 20, 22 ansteuern kann.

Das Antriebssteuerungssystem 24 umfasst einen Speicher 26 und zumindest eine Verarbeitungseinheit 28 in Form von oder nach Art eines Mikroprozessors. In den Speicher 26 ist ein Steuerungsprogramm 30 geladen, das im Betrieb des Antriebssteuerungssystems 24 durch die jeweilige Verarbeitungseinheit 28 ausgeführt wird. Das Steuerungsprogramm 30 umfasst dafür eine Softwareimplementation eines oder mehrerer Steuerungsalgorithmen 32. Unter Kontrolle des Steuerungsprogramms 30 werden Ausgangssignale 40, 42 zur Ansteuerung des jeweiligen Antriebs 26, 28 ermittelt und zum Beispiel über eine Antriebsregelungseinheit 44 ausgegeben.

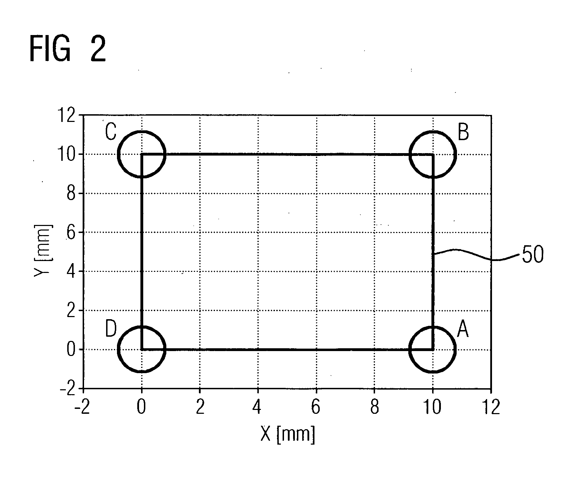

FIG 2 zeigt eine Darstellung einer Soll-Bahn 50, wie sie zum Beispiel von einer Bearbeitungsmaschine 10 (FIG 1) im Betrieb abzufahren ist. Die dargestellte Soll-Bahn 50 hat die Form eines Rechtecks und die einzelnen Ecken sind mit "A", "B", "C" und "D" bezeichnet. Entlang der Soll-Bahn 50 wird zunächst die Ecke "A", dann die Ecke "B" und so weiter erreicht.

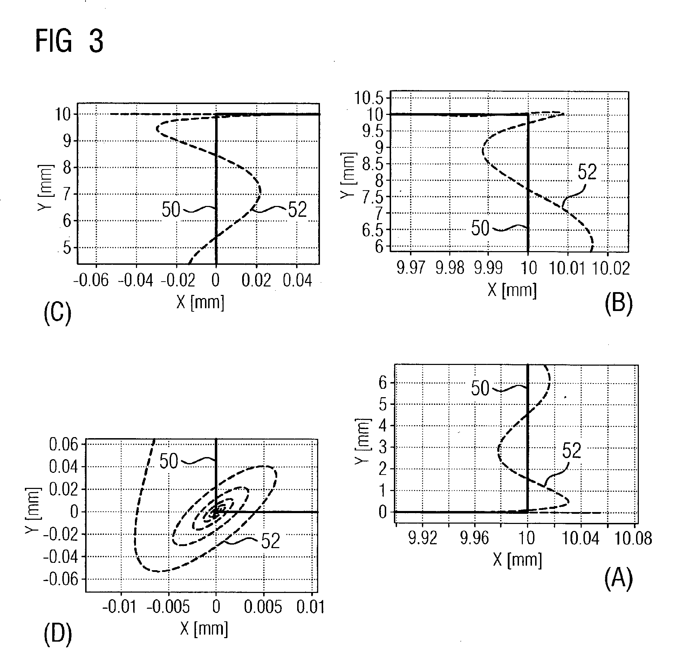

FIG 3 zeigt vergrößerte Ausschnitte aus der Darstellung in FIG 2 und zwar jeweils im Bereich der Ecken A, B, C und D; die einzelnen Darstellungen in FIG 3 sind dafür mit "(A)", "(B)", "(C)" und "(D)" bezeichnet. Erkennbar sind jeweils Abschnitte der Soll-Bahn 50 und eine Spur einer tatsächlich von der Bearbeitungsmaschine 10 abgefahrenen Bahn, also einer Ist-Bahn 52. Es ist ohne weiteres erkennbar, dass Soll-Bahn 50 und Ist-Bahn 52 teilweise erheblich voneinander abweichen. Die Ecken A, B, C und D der Soll-Bahn 50 und korrespondierende Stellen eines aus der Soll-Bahn 50 resultierenden Bewegungsprofils sind demnach als kritische Regionen erkannt, an denen sich unerwünschte Schwingungen ausbilden.

Die Ist-Bahn 52 kann sich zum Beispiel aufgrund einer Simulation einer Bewegung der jeweiligen Bearbeitungsmaschine 10 entlang eines aus der Soll-Bahn 50 resultierenden Bewegungsprofils ergeben.

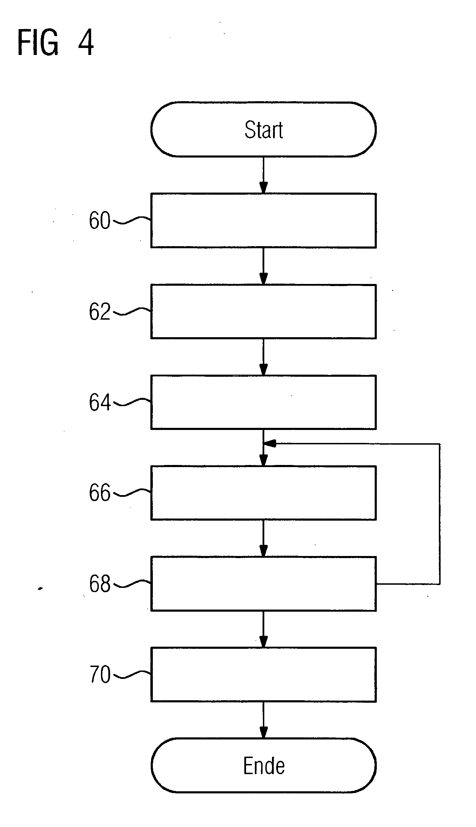

Das hier vorgeschlagene Verfahren zur Vermeidung oder zumindest Entschärfung solcher kritischen Regionen - hier und im Folgenden ohne Verzicht auf eine weitergehende Allgemeingültigkeit zusammenfassend als "Entschärfung" bezeichnet - wird nun anhand der Darstellung in FIG 4 mit weiteren Details erläutert. Dabei zeigt FIG 4 ein schematisch vereinfachtes Flussdiagramm zum Betrieb einer Bearbeitungsmaschine 10 (FIG 1).

Dabei erfolgt in einem ersten Schritt/Funktionsblock 60 eine Berechnung oder in sonstiger Form eine Ermittlung eines Bewegungsprofils. Das Bewegungsprofil kann nach einem bekannten Verfahren berechnet werden. Bei numerischen Steuerungssystemen werden üblicherweise zwei Berechnungsmethoden/ Bahnsteueralgorithmen zur Verfügung gestellt, die ruckbegrenzte oder beschleunigungsbegrenzte Bewegungsprofile liefern. Für ruckbegrenzte Bewegungsprofile sowie beschleunigungsbegrenzte Bewegungsprofile und die jeweils zugrunde liegende Berechnungsmethode/Bahnsteuerungsalgorithmik wird mitunter in der Fachterminologie auch die Bezeichnung "soft" bzw. "brisk" verwendet. Das hier ermittelte Bewegungsprofil beinhaltet unter anderem die Zeitpunkte, zu denen der jeweilige Bahnsteueralgorithmus gemäß der programmierten und zum Beispiel aus einem NC-Teileprogramm herrührenden Soll-Bahn/Soll-Kontur die Dynamikparameter (Bahngeschwindigkeit und -beschleunigung, -ruck) variiert. Gegeben ist also der zeitliche Verlauf des Bahnparameters s(t), sowie dessen zeitliche Ableitungen. Dieser eindimensionale Bahnparameter s(t) dient bekanntlich zur impliziten Synchronisierung der an der Bewegung beteiligten, "interpolierenden" Maschinenachsen.

In einem zweiten Schritt/Funktionsblock 62 erfolgt eine Identifikation der schwingungskritischen Regionen. Eine Darstellung schwingungskritischer Stellen/Abschnitte entlang der Soll-Bahn 50 ist in FIG 3 gegeben. Zu jeder schwingungskritischen Stelle / jedem schwingungskritischen Abschnitt entlang der Soll-Bahn 50 gehört eine schwingungskritische Region entlang des ermittelten Bewegungsprofils.

Die Identifikation der schwingungskritischen Regionen erfolgt durch eine Simulation der jeweiligen Bearbeitungsmaschine 10 und ein simuliertes Abfahren der Soll-Bahn 50. Mittels einer solchen Simulation werden diejenigen Regionen des aus der Soll-Bahn 50 / Soll-Kontur resultierenden Bewegungsprofils identifiziert, in denen es zur Ausprägung von Schwingungen einzelner oder mehrerer Achsen 16, 18 der jeweiligen Bearbeitungsmaschine 10 und somit zu einer Abweichung zwischen der Soll-Bahn 50 / Soll-Kontur und der tatsächlichen Bewegung (Ist-Bahn 52) kommt.

Die Herausforderung in diesem Schritt liegt in der Verbindung zwischen der Bahn- und der Achssicht. Die Simulation kann wahlweise rein zeitbasiert erfolgen, indem ein dynamisches Modell der Maschinenachsen 16, 18 mit den aus dem Bewegungsprofil resultierenden Achsprofilen beaufschlagt wird und anhand der simulierten Achspositionen die Abweichung errechnet wird. Alternativ kann die Simulation frequenzbasiert oder in Kombination zeit- und frequenzbasiert erfolgen. Gerade letzteres (z.B. mittels Wavelet-Transformation) bietet die Möglichkeit, gesuchte Anteile gleichzeitig im Frequenzspektrum als auch im Zeitbereich zu lokalisieren.

Als eine mögliche Unterteilung des Bewegungsprofils für eine Gesamtkontur in einzeln untersuchbare Regionen bieten sich zum Beispiel die Schaltzeitpunkte aus dem vorangehend berechneten Bewegungsprofil an.

Die bereits erwähnte zeitliche Skalierung (Zeitskalierung) erfolgt ausgehend von einem dritten Schritt/Funktionsblock 64. Für das Auftreten von hohen Schwingungsamplituden in einer kritischen Region ist das zuvor eingebrachte Spektrum der Anregung ursächlich verantwortlich. Demnach muss der einer kritischen Region vorangehende Abschnitt geeignet beeinflusst werden, damit nachfolgend die Ausprägung von Schwingungen unterbleibt.

Dies geschieht mittels einer Zeitskalierung in der Art, dass die als Bewegungsprofil bereitgestellten Zeitverläufe der Bahnsteuerung gedehnt (ggf. auch gestaucht) werden. Angewandt wird die Zeitskalierung auf den zeitlichen Verlauf des Bahnparameters s(t) und damit implizit auch auf seine zeitlichen Ableitungen, die Bahngeschwindigkeit, -beschleunigung und - ruck.

Das Prinzip der Zeitskalierung führt zusätzlich zur mit dem Formelzeichen t bezeichneten Zeit eine mit dem Formelzeichen $\tau$ bezeichnete Rechengröße als neue Zeitvariable sowie eine im Folgenden auch kurz als Skalierungsfunktion c(t) bezeichnete Zeitskalierungsfunktion ein:

$$\tau = \int c(t)dt \qquad \frac{d\tau}{dt} = c(t)$$

Die Skalierungsfunktion c(t) hat die Eigenschaften, dass bei c(t) < 1 die Zeitachse gedehnt wird, dass bei c(t) > 1 die Zeitachse gestaucht wird und dass bei einer konstanten Skalierung mit c(t) = c = const sich die Rechengröße $\tau$ als Produkt aus der Zeit t und der konstanten Skalierung c ergibt: $\tau$ = C•t.

Aus einer gegebenen Zeitfunktion s(t) entsteht durch die Zeitskalierung der gedehnte (gestauchte) Verlauf, indem die ursprüngliche Funktion zur skalierten Zeit $\tau$ ausgewertet wird:

$$\widetilde{s}(t) = s(\tau)$$

Für die zeitlichen Ableitungen gilt entsprechend:

$$\dot{\widetilde{s}}(t) = \frac{ds(\tau)}{d\tau}\frac{d\tau}{dt} = s'(\tau)c(t)$$

und

$$\ddot{\widetilde{s}}(t) = s''(\tau)c^2(t) + s'(\tau)\dot{c}(t) \qquad\qquad (1)$$

Die Wirkung der Zeitskalierung im Frequenzbereich zeigt sich im Bildbereich der Fouriertransformation (hier vereinfacht für eine konstante Skalierung c(t) = c = const):

$$\widetilde{H}(f) = \int h(\tau)e^{-i2\pi ft}dt = \int h(\tau)e^{-i2\pi\frac{f}{c}\tau}\frac{1}{c}d\tau = \frac{1}{c}F\left(\frac{f}{c}\right)$$

Der Spektralanteil einer grundsätzlich beliebigen ursprünglichen Funktion h(t) bei der Frequenz f verschiebt sich also reziprok zur Zeitskalierung.

Der Form der Skalierungsfunktion c(t) kommt besondere Bedeutung zu. An sie werden die folgenden Anforderungen gestellt: Zum einen muss die Skalierung veränderlich sein (nicht konstant), um den Verhältnissen in jeder kritischen Region einzeln gerecht werden zu können.

Zum anderen muss die Skalierungsfunktion c(t) genügend glatt sein, damit auch die mit der Skalierungsfunktion c(t) skalierten Bewegungsprofile glatt und stetig differenzierbar sind (siehe Auftreten der Ableitungen von c(t) in Gleichung (1)). Schließlich müssen die Segmente der Skalierungsfunktionen c(t) in den Regionen eine stetige, also sprung- und knickfreie Verbindung erlauben.

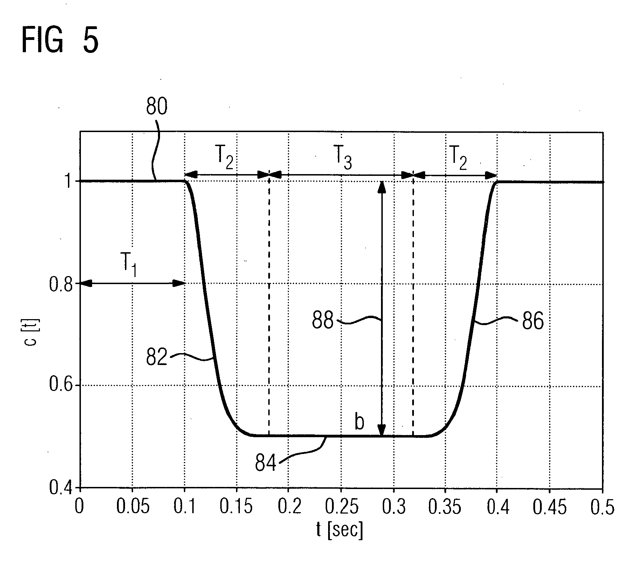

Eine mögliche Ausprägung einer Skalierungsfunktion c(t) ist beispielhaft FIG 5 gezeigt. Die Skalierungsfunktion c(t) weist einen Vorlauf 80, einen Anfangsbereich 82, einen Zentralbereich 84 und einen Endbereich 86 sowie eine mit dem Formelzeichen b bezeichnete wirksame Höhe 88 auf. Eine Dauer des Vorlaufs ist als T1 bezeichnet. Die Dauer von Anfangsbereich 82, Zentralbereich 84 und Endbereich 86 ist jeweils mit T2, T3 bzw. T4 bezeichnet. Die dargestellte Skalierungsfunktion c(t) lässt auch die zugrunde liegende Grundform, also die Skalierungsschablone g(t), erkennen, denn eine konkrete Skalierungsfunktion c(t) unterscheidet sich von der Grundform nur durch unterschiedliche Werte für die Parameter T1, T2, T3, T4 und b.

Ausgehend von einer im dritten Schritt / Funktionsblock 64 angesetzten jeweiligen Grundform der Skalierungsfunktion g(t) (FIG 5) erfolgt in einem nachfolgenden vierten Schritt / Funktionsblock 66 (FIG 4) eine Ermittlung einer optimalen Skalierung des Bahnparameters s(t) vor der aktuell behandelten kritischen Region durch eine angepasste, optimierte Skalierungsfunktion c(t). $\tilde{s}(t)=s(\tau)=s(c(t))$

Die auch als Vorlage oder Schablone (Skalierungsschablone g(t)) auffassbare Grundform der Skalierungsfunktion c(t) ist durch eine endliche Anzahl von Parametern, nämlich die oben erwähnten Parameter T1, T2, T3, T4 und b, bestimmt und durch deren geeignete Auswahl derart formbar und skalierbar, dass sie für eine bestimmte kritische Region anpassbar ist, ihr grundsätzlicher Charakter jedoch erhalten bleibt. Der Parametersatz bestimmt die eigentliche Beeinflussung der jeweiligen kritischen Region durch die Zeitskalierung und den Anschluss an benachbarte Regionen. Hinsichtlich des Anschlusses an benachbarte Regionen wird angestrebt, dass der numerische Wert der Skalierungsfunktion c(t) im Endbereich wieder auf 1.0 ansteigt und die zeitliche Skalierung damit verschwindet. Gelingt dies nicht, so beginnt die nächste Skalierungsfunktion c(t) bei dem Endwert der vorherigen Sektion.

Eine optimale Skalierung einzelner Abschnitte des Bewegungsprofils jeweils vor einer kritischen Region hat die folgenden Effekte: Zum einen wird die Schwingungsanregung in den beteiligten Achsen soweit reduziert oder minimiert, dass die maximale Amplitude unter einer gegeben Grenze bleibt. Diese Forderung führt anschaulich zu kleinen Werten der Skalierung c(t). Zum anderen wird zugleich auch größtmögliche (d.h. maximierte) Dynamik ermöglicht. Diese Forderung führt anschaulich zu großen Werten der Skalierung c(t).

Die Wirkung der Skalierung bei der in FIG 3 dargestellten Soll-Bahn 50 ist derart, dass die resultierende Ist-Bahn nach der Skalierung (in FIG 3 nicht bezeichnet) so weit mit der dargestellten Soll-Bahn 50 zur Deckung kommt, dass in der zeichnerischen Darstellung keine Unterschiede erkennbar sind.

Das Auffinden günstiger oder optimaler Parameter für die Skalierungsfunktion c(t) ist ein Problem der Mehrgrößenoptimierung, welches mit Methoden der angewandten Mathematik gelöst werden kann. Eine mögliche Implementierung verwendet z.B. eine Kombination des Pattern-Search-Algorithmus und der Golden-Section-Methode. Ausgehend von Startwerten für die Parameter der Skalierungsfunktion c(t) findet der Pattern-Search-Algorithmus die günstigste "Richtung" für eine Variation der Parameter im jeweiligen mehrdimensionalen Suchraum. Die Golden-Section-Methode ermöglicht sodann das Auffinden eines Minimums entlang der eingeschlagenen Richtung in möglichst geringem Aufwand. Eine Beschreibung dieser Verfahren und einer Beschreibung von deren Verwendung findet sich zum Beispiel in dem bei Wiley-Interscience in 2001 erschienen Fachbuch "Applied Optimization with Matlab Programming" von P. Venkataraman.

Wenn auf diese Weise eine günstige oder optimale Skalierungsfunktion c(t) gefunden wurde, kann in einem fünften Schritt / Funktionsblock 68 wieder zum vierten Schritt / Funktionsblock 66 verzweigt werden, solange noch nicht das gesamte Bewegungsprofil bearbeitet wurde. Das Verzweigen und später das gegebenenfalls erneute Verzweigen zum oder vor den vierten Schritt / Funktionsblock 66 bewirkt, dass eine optimale Skalierungsfunktion c(t) für die jeweils nächste kritische Region ermittelt wird. Die vom fünften Schritt / Funktionsblock 68 ausgehende Schleife bewirkt also eine Bearbeitung und anschließende Verbindung aller Regionen des im ersten Schritt / Funktionsblock 60 generierten Bewegungsprofils und damit eine Bearbeitung / Optimierung zum Beispiel eines kompletten NC-Teileprogramms. Die Kriterien für die jeweilige Optimierung der Parameter der Skalierungsfunktion c(t) stellen dabei den genügend stetigen Übergang zwischen den unterschiedlichen Abschnitten des Bewegungsprofils, nämlich von einem nicht skalierten Abschnitt zu einem skalierten Abschnitt, von einem skalierten Abschnitt zu einem nicht skalierten Abschnitt, und von einem skalierten Abschnitt zu einem nachfolgenden skalierten Abschnitt, sicher.

Abschließend kann mit einem sechsten Schritt / Funktionsblock 70 das skalierte Bewegungsprofil ausgeführt werden. Das skalierte Bewegungsprofil oder die skalierten Abschnitte des Bewegungsprofils kann bzw. können im Antriebssteuerungssystem 24 in gewohnter Art und Weise weiterverarbeitet werden. Speziell bei den unter der Marke SINUMERIK bekannten numerischen Steuerungssystemen der Anmelderin können die nachfolgenden Schritte der Interpolation (Auswertung der Zeitfunktion im festen Abtasttakt der Steuerung) und der Kinematiktransformation (Übertragung der Bewegung auf die einzelnen Maschinenachsen) unverändert ausgeführt werden.

Die in FIG 4 dargestellte Reihenfolge der einzelnen Schritte / Funktionsblöcke ist nicht zwingend. Die Grundform der Skalierungsfunktion g(t) kann zum Beispiel auch unmittelbar vor oder nach der Generierung des Bewegungsprofils (erster Schritt / Funktionsblock 60) in einer Weise festgelegt werden, dass später, nämlich insbesondere bei der Optimierung der Skalierungsfunktion c(t) (vierter Schritt / Funktionsblock 66) darauf zurückgegriffen werden kann. Des Weiteren kann die vom fünften Schritt / Funktionsblock 68 ausgehende Schleife auch vor den zweiten Schritt / Funktionsblock 62 verzweigen, so dass im Vorfeld einer Ermittlung einer weiteren Skalierungsfunktion zur sukzessiven Entschärfung der kritischen Regionen entlang des Bewegungsprofils stets eine komplette neue Simulation einer Bewegung entlang des Bewegungsprofils erfolgt.

Die in FIG 4 dargestellten Schritte / Funktionsblöcke können auch schlagwortartig folgendermaßen bezeichnet werden: Erster Schritt / Funktionsblock 60 - "Bewegungsprofil generieren";
zweiter Schritt / Funktionsblock 62 - "Kritische Region(en) identifizieren;
dritter Schritt / Funktionsblock 64 - "Skalierungsschablone g(t) als Grundform für die Skalierungsfunktion c(t) verwenden";
vierter Schritt / Funktionsblock 66 - "Skalierungsfunktion optimieren";
fünfter Schritt / Funktionsblock 68 - "Schleife über alle Abschnitte des Bewegungsprofils";
sechster Schritt / Funktionsblock 70 - "Skaliertes Bewegungsprofil anwenden".

Einzelne im Vordergrund stehende Aspekte der hier eingereichten Beschreibung lassen sich damit nochmals wie folgt zusammenfassen:

Das Verfahren basiert auf einer vorgegebenen Soll-Kontur, zum Beispiel einer Soll-Kontur eines durch Fräsen herzustellenden Werkstücks, die einer numerischen Steuerung vorgegeben wird und die daraus ein Bewegungsprofil ermittelt. Normalerweise ist das Vorgehen ausgehend von dem Bewegungsprofil so, dass aus dem Bewegungsprofil Achsprofile bestimmt werden, die dann den jeweiligen Achssteuerungen zugeführt werden, wobei jede Achssteuerung (z.B. x-Achse, y-Achse, usw.) die jeweilige Achskinematik ansteuert, so dass sich mit der tatsächlichen Bewegung der Werkzeugmaschine, des Roboters, usw. eine Ist-Kontur ergibt.

Gemäß dem hier vorgestellten Ansatz ist nun vorgesehen, dass durch Simulation die Ist-Kontur mit der Soll-Kontur verglichen wird. Dabei wird es in einzelnen Abschnitten Abweichungen geben und sobald solche Abweichungen einen vorgegebenen Schwellwert überschreiten, ist eine kritische Region identifiziert und für deren Entschärfung soll eine zeitliche Skalierung erfolgen.

Für die Skalierung ist eine Skalierungsfunktion und für diese eine der Skalierungsfunktion zugrunde liegende Grundform vorgesehen. Die Skalierung beeinflusst das Bewegungsprofil und damit alle aus dem Bewegungsprofil resultierenden Achsprofile.

Die Bestimmung der jeweils tatsächlichen Skalierungsfunktion ausgehend von deren Grundform ist ein Optimierungsvorgang. Optimiert werden die Parameter T1, T2, T3 und b. Wichtig ist, dass wenn bei der Simulation eine Überschreitung des Schwellwerts hinsichtlich der Abweichung der Ist-Kontur von der Soll-Kontur erkannt wird, sich daraus zunächst eine kritische Region ergibt, dass die Skalierung aber nicht in dieser kritischen Region stattfindet, sondern vor der kritischen Region.

Zu Beginn der kritischen Region ist die Skalierung nicht mehr aktiv und die Zeit T1 bestimmt im Grunde, wie viel Vorlauf vor der jeweiligen kritischen Region ohne Skalierung bleiben kann. Die Höhe der bei der Simulation festgestellten Abweichung der Ist-Kontur von der Soll-Kontur ist erstaunlicherweise nicht bestimmend für das Maß der mit der Skalierung bewirkten Geschwindigkeitsreduktion (Parameter b), sondern die Abweichung wird durch ein Zusammenspiel aller vier Parameter T1, T1, T3 und b kompensiert, deren Ermittlung - wie erwähnt - ein Ergebnis eines Optimierungsvorgangs ist.

Sobald auf diese Weise für eine kritische Region eine Skalierung feststeht, erfolgt eine neue Simulation des jetzt skalierten Bewegungsprofils und bei einer eventuellen, zeitlich später liegenden weiteren kritischen Region erfolgt eine Kompensation der festgestellten Abweichungen zwischen Soll- und Ist-Kontur durch eine weitere Skalierung unmittelbar vor dieser weiteren kritischen Region.

Dieses Verfahren, also die erneute Simulation des Bewegungsprofils mit allen bisher ermittelten Skalierungen, wird sukzessive so lange fortgeführt, bis alle kritischen Regionen erfasst sind.

Skalierungen können sich dabei auch überlagern. Die Skalierungsfunktion kann des Weiteren symmetrisch sein (der Parameter T2 fließt dann in gleicher Form zu Beginn und zum Ende der Skalierungsfunktion ein und bestimmt die Dauer, wenn die Skalierung reduziert und schließlich wieder erhöht wird). Ansonsten ist die Kontur der Skalierungsfunktion bei besonderen Ausführungsformen in ihren Seitenbereichen symmetrisch aufgebaut und besteht zum Beispiel aus zwei Segmenten, die jeweils Exponentialfunktionen darstellen, nämlich $e^{\alpha t2}$. Optimierungskriterien für die Bestimmung der Parameter der Skalierungsfunktion können sein, dass der Parameter b normalerweise möglichst groß sein soll und dass ebenfalls der Parameter T2 normalerweise möglichst groß sein soll.

**Patentansprüche**

1. Verfahren zum Betrieb einer Bearbeitungsmaschine (10) mit folgenden Schritten:

- aus einer Soll-Bahn (50) oder Soll-Kontur wird ein Bewegungsprofil ermittelt,
- entlang des Bewegungsprofils wird als kritische Region eine schwingungskritische Stelle ermittelt,
- in einem Abschnitt vor der jeweils ermittelten kritischen Region erfolgt eine zeitliche Skalierung des Bewegungsprofils,

wobei die zeitliche Skalierung mit einer Skalierungsfunktion c(t) erfolgt, die einen Anfangsbereich (82), einen Zentralbereich (84) und einen Endbereich (86) umfasst,
wobei durch Optimierung eine Dauer des Anfangs-, Zentral- und Endbereichs (82, 84, 86) der Skalierungsfunktion c(t) und eine wirksame Höhe (88) der Skalierungsfunktion c(t) im Zentralbereich (84) ermittelt wird, um die Schwingung in der kritischen Region zu vermeiden oder zu reduzieren.

2. Verfahren nach Anspruch 1, wobei die zugrunde gelegte Skalierungsfunktion c(t) symmetrisch ist, so dass eine ermittelte Dauer des Anfangsbereichs (82) der Skalierungsfunktion c(t) auch die Dauer des Endbereichs (86) der Skalierungsfunktion c(t) bestimmt.

3. Verfahren nach Anspruch 1 oder 2, wobei zur Optimierung der Parameter der Skalierungsfunktion c(t), nämlich Dauer des Anfangs-, Zentral- und Endbereichs (82, 84, 86) und wirksame Höhe (88) im Zentralbereich (84), Verfahren der Mehrgrößenoptimierung verwendet werden.

4. Verfahren nach Anspruch 3, wobei als Verfahren der Mehrgrößenoptimierung eine Kombination des Pattern-Search-Algorithmus und der Golden-Section-Methode verwendet wird, indem ausgehend von Startwerten für die Parameter der Skalierungsfunktion c(t) der Pattern-Search-Algorithmus eine günstige Richtung für eine Variation der Parameter in einem mehrdimensionalen Suchraum vorgibt und indem die Golden-Section-Methode sodann das Auffinden eines Minimums entlang der eingeschlagenen Richtung mit möglichst geringem Aufwand ermöglicht.

5. Verfahren nach einem der vorangehenden Ansprüche, wobei beim Ermitteln einer kritischen Region entlang des Bewegungsprofils jeweils die entlang des Bewegungsprofils erste schwingungskritische Stelle ermittelt wird.

6. Verfahren nach einem der vorangehenden Ansprüche, wobei die Identifikation von kritischen Regionen sukzessive nacheinander erfolgt.

7. Verfahren nach einem der vorangehenden Ansprüche, wobei als kritische Stelle eine Position entlang des Bewegungsprofils ermittelt wird, bei der ein Bahnsteuerungsalgorithmus Dynamikparameter der Bearbeitungsmaschine variiert.

8. Verfahren nach einem der vorangehenden Ansprüche, wobei die Ermittlung kritischer Stellen im Rahmen einer Simulation des Bewegungsprofils erfolgt.

9. Verfahren nach einem der vorangehenden Ansprüche, wobei bei einem bereits aufgrund einer vorangehenden Planung vorliegenden, zeitoptimalen Bewegungsprofil die zeitliche Skalierung nur noch eine abschnittsweise Dehnung der Zeitbasis bewirkt.

10. Computerprogramm mit Programmcode-Mitteln, um alle Schritte von jedem beliebigen der Ansprüche 1 bis 9 durchzuführen, wenn das Programm durch ein Antriebssteuerungssystem (24) für eine Bearbeitungsmaschine (10) ausgeführt wird.

11. Digitales Speichermedium mit elektronisch auslesbaren Steuersignalen, die so mit einem programmierbaren Antriebssteuerungssystem (24) für eine Bearbeitungsmaschine (10) zusammenwirken können, dass ein Verfahren nach einem der Ansprüche 1 bis 9 ausgeführt wird.

12. Antriebssteuerungssystem (24) für eine Bearbeitungsmaschine (10) mit einer Verarbeitungseinheit (28) und einem Speicher (26), in den ein Computerprogramm nach Anspruch 10 geladen ist, das im Betrieb der Bearbeitungsmaschine (10) durch die Verarbeitungseinheit (28) ausgeführt wird.

**Claims**

1. Method for operating a processing machine (10) having the following steps:

   - a movement profile is determined from a target trajectory (50) or target contour,
   - an oscillation-critical location is determined along the movement profile as a critical region,

- a time scaling of the movement profile is effected in a section before the respectively determined critical region,

wherein the time scaling is effected using a scaling function c(t) which comprises an initial region (82), a central region (84) and an end region (86),

wherein by optimisation a duration of the initial, central and end region (82, 84, 86) of the scaling function c(t) and an effective height (88) of the scaling function c(t) in the central region (84) is determined in order to avoid or reduce the oscillation in the critical region.

2. Method according to claim 1, wherein the underlying scaling function c(t) is symmetrical, so that a determined duration of the initial region (82) of the scaling function c(t) also determines the duration of the end region (86) of the scaling function c(t).

3. Method according to claim 1 or 2, wherein to optimise the parameters of the scaling function c(t), namely duration of the initial, central and end region (82, 84, 86) and effective height (88) in the central region (84), methods of multi-variable optimisation are used.

4. Method according to claim 3, wherein a combination of the pattern search algorithm and the golden section method is used as a method of multi-variable optimisation, in that starting from initial values for the parameters of the scaling function c(t) the pattern search algorithm simulates a favourable direction for a variation of the parameters in a multidimensional search space and in that the golden section method then allows a minimum to be found along the relevant direction with the least possible effort.

5. Method according to one of the preceding claims, wherein in each case the first oscillation-critical location along the movement profile is determined when determining a critical region along the movement profile.

6. Method according to one of the preceding claims, wherein the identification of critical regions is effected successively one after the other.

7. Method according to one of the preceding claims, wherein a position along the movement profile is determined as the critical location, wherein a trajectory control algorithm varies dynamic parameters of the processing machine.

8. Method according to one of the preceding claims, wherein the determination of critical locations is effected in the context of a simulation of the movement profile.

9. Method according to one of the preceding claims, wherein when a time-optimal movement profile is already present due to previous planning, the time scaling effects only a sectional elongation of the time base.

10. Computer program having program code means to perform all the steps of any of claims 1 to 9 when said program is executed by a drive control system (24) for a processing machine (10).

11. Digital storage medium with electronically readable control signals which can interact with a programmable drive control system (24) for a processing machine (10) such that a method according to one of claims 1 to 9 is executed.

12. Drive control system (24) for a processing machine (10) having a processing unit (28) and a memory (26), in which a computer program according to claim 10 is loaded, which during operation of the processing machine (10) is executed by the processing unit (28).

**Revendications**

1. Procédé pour faire fonctionner une machine ( 10 ) de traitement ayant les stades suivantes :

- on détermine un profil de déplacement à partir d'une trajectoire ( 50 ) de consigne ou d'un contour de consigne,
- on détermine le long du profil de déplacement un point critique du point de vue des oscillations en tant que région critique,
- dans un tronçon avant la région critique déterminée respectivement on effectue une mise à l'échelle dans le temps du profil de déplacement,

la mise à l'échelle dans le temps s'effectuant par une fonction c ( t ) de mise à l'échelle, qui comprend une partie ( 82 ) de début, une partie ( 84 ) centrale et une partie ( 86 ) de fin,

dans lequel on détermine par optimisation une durée de la partie ( 82 ) de début, de la partie ( 84 ) centrale et de la partie ( 86 ) de fin de la fonction c ( t ) de mise à l'échelle et une hauteur ( 88 ) efficace de la fonction c ( t ) de mise à l'échelle dans la partie ( 84 ) centrale, pour empêcher ou pour réduire l'oscillation de la région critique.

2. Procédé suivant la revendication 1, dans lequel la fonction c ( t ) de mise à l'échelle de base est symétrique, de manière à ce qu'une durée déterminée de la partie ( 82 ) de début de la fonction c ( t ) de mise à l'échelle détermine aussi la durée de la partie ( 86 ) de fin de la fonction c ( t ) de mise à l'échelle.

3. Procédé suivant la revendication 1 ou 2, dans lequel pour l'optimisation des paramètres de la fonction c ( t ) de mise à l'échelle, à savoir de la durée de la partie ( 82 ) de début, de la partie ( 84 ) centrale et de la partie ( 86 ) de fin, et de la hauteur ( 88 ) efficace dans la partie ( 84 ) centrale, on utilise un procédé d'optimisation à plusieurs variables.

4. Procédé suivant la revendication 3, dans lequel, comme procédé d'optimisation à plusieurs variables, on utilise une combinaison de l'algorithme Pattern-Search et de la méthode Golden-Section, par le fait qu'en partant de valeurs de départ des paramètres de la fonction c ( t ) de mise à l'échelle, l'algorithme Pattern-Search donne une bonne direction pour une variation des paramètres dans un sous-espace à plusieurs dimensions et par le fait que la méthode Golden-Section rend possible ensuite de trouver un minimum le long de la direction prise avec une dépense aussi petite que possible.

5. Procédé suivant l'une des revendications précédentes, dans lequel, lors de la détermination d'une région critique, on détermine le long du profil de déplacement respectivement le premier point critique du point de vue des oscillations le long du profil de déplacement.

6. Procédé suivant l'une des revendications précédentes, dans lequel on effectue l'identification de régions critiques successivement les unes après les autres.

7. Procédé suivant l'une des revendications précédentes, dans lequel on détermine comme point critique une position le long du profil de déplacement pour laquelle un algorithme de commande de trajectoire fait varier des paramètres dynamiques de la machine de traitement.

8. Procédé suivant l'une des revendications précédentes, dans lequel on effectue la détermination de points critiques dans le cadre d'une simulation du profil de déplacement.

9. Procédé suivant l'une des revendications précédentes, dans lequel, pour un profil de déplacement optimum dans le temps déjà présent en raison d'une planification antérieure, la mise à l'échelle dans le temps ne provoque qu'un allongement tronçon par tronçon de la base de temps.

10. Programme d'ordinateur ayant des moyens de code de programme pour effectuer tous les stades de l'une quelconque des revendications 1 à 9, lorsque le programme est réalisé par un système ( 24 ) de commande d'entraînement d'une machine ( 10 ) de traitement.

11. Support de mémoire numérique ayant des signaux de commande pouvant être exploités électroniquement, qui peuvent coopérer avec un système ( 24 ) de commande d'entraînement programmable d'une machine ( 10 ) de traitement, de manière à exécuter un procédé suivant l'une des revendications 1 à 9.

12. Système ( 24 ) de commande d'entraînement d'une machine ( 10 ) de traitement, comprenant une unité ( 28 ) de traitement et une mémoire ( 26 ) dans laquelle un programme d'ordinateur suivant la revendication 10 est chargé, programme qui, lorsque la machine ( 10 ) de traitement est en fonctionnement, est exécuté par l'unité ( 28 ) de traitement.

FIG 1

## FIG 2

# FIG 3

(C)

(B)

(D)

(A)

# FIG 4

```
        ┌─────────────────┐
        │      Start       │
        └─────────────────┘
                 │
                 ▼
60  ───  ┌─────────────────┐
         │                 │
         └─────────────────┘
                 │
                 ▼
62  ───  ┌─────────────────┐
         │                 │
         └─────────────────┘
                 │
                 ▼
64  ───  ┌─────────────────┐
         │                 │
         └─────────────────┘
                 │
                 ▼
66  ───  ┌─────────────────┐
         │                 │─────┐
         └─────────────────┘     │
                 │               │
                 ▼               │
68  ───  ┌─────────────────┐     │
         │                 │─────┘
         └─────────────────┘
                 │
                 ▼
70  ───  ┌─────────────────┐
         │                 │
         └─────────────────┘
                 │
                 ▼
        ┌─────────────────┐
        │       Ende       │
        └─────────────────┘
```

# FIG 5

**IN DER BESCHREIBUNG AUFGEFÜHRTE DOKUMENTE**

**In der Beschreibung aufgeführte Patentdokumente**

- DE 69514570 T2

- US 20080275574 A

**In der Beschreibung aufgeführte Nicht-Patentliteratur**

- **N. C. SINGER ; W. P. SEERING.** Preshaping command inputs to reduce system vibration. *ASME Journal of Dynamic Systems, Measurement and Control,* 1990, vol. 112, 76-82
- **VON W. SINGHOSE ; N. SINGER.** Effects of input shaping on twodimensional trajectory following. *IEEE Transactions on Robotics and Automation,* 1996, vol. 12 (6), 881-887

- **VON H. GROSS ; J. HAMANN ; G. WIEGAERTNER.** Electrical Feed Drives in Automation: Basic, Computation, Dimensioning. *MCD Corporate Publishing, Erlangen and Munich,* 2001
- Beispiel in dem. Wiley-Interscience, 2001
- **VON P. VENKATARAMAN.** Applied Optimization with Matlab Programming